(19) Europäisches Patentamt / European Patent Office / Office européen des brevets

(11) EP 4 259 700 B1

(12) **EUROPEAN PATENT SPECIFICATION**

(45) Date of publication and mention of the grant of the patent:
**01.01.2025 Bulletin 2025/01**

(21) Application number: **21810638.3**

(22) Date of filing: **25.11.2021**

(51) International Patent Classification (IPC):
***C08J 5/18*** *(2006.01)* ***C08L 23/10*** *(2006.01)*

(52) Cooperative Patent Classification (CPC):
(C-Sets available)
**C08L 23/10; C08J 5/18;** C08J 2323/16; C08J 2423/16; C08L 2203/162 (Cont.)

(86) International application number:
**PCT/EP2021/082938**

(87) International publication number:
**WO 2022/122395 (16.06.2022 Gazette 2022/24)**

(54) **PROPYLENE POLYMER COMPOSITION**

PROPYLENPOLYMERZUSAMMENSETZUNG

COMPOSITION DE POLYMÈRE EN PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2020 EP 20212689**

(43) Date of publication of application:
**18.10.2023 Bulletin 2023/42**

(73) Proprietor: **Basell Poliolefine Italia S.r.l.**
**20121 Milano (IT)**

(72) Inventors:
- **MASSARI, Paola**
  **44121 Ferrara (IT)**
- **FELISATI, Andrea**
  **44122 Ferrara (IT)**
- **CAVALIERI, Claudio**
  **44122 Ferrara (IT)**
- **GALVAN, Monica**
  **44122 Ferrara (IT)**
- **GRAZZI, Michele**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2017/021136 WO-A1-2017/021137**
**WO-A1-2017/021138 WO-A1-2017/021139**

- **PELLEGATTI G ET AL: "Blends of butene-1 co-polymers plastomers with crystalline propylene polymers", RESEARCH DISCLOSURE, KENNETH MASON PUBLICATIONS, HAMPSHIRE, UK, GB, vol. 537, no. 10, 1 January 2009 (2009-01-01), pages 26, XP007138678, ISSN: 0374-4353**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 259 700 B1

(52) Cooperative Patent Classification (CPC): (Cont.)

C-Sets
**C08L 23/10, C08L 23/12, C08L 23/0815**

## Description

FIELD OF THE INVENTION

The present disclosure relates to propylene compositions having a low seal initiation temperature and good hot tack fit for producing films, in particular biaxially oriented polypropylene films (BOPP) and cast films.

BACKGROUND OF THE INVENTION

Such kind of polypropylene compositions is widely used for making films in the packaging field, especially in the food packaging field, but also for the packaging non-food products and for the production of non-packaging items.

Packaging examples are the primary packaging of hygienic items, textile articles, magazines, mailing films, secondary collation packaging, shrink packaging films and sleeves, stretch packaging films and sleeves, form-fill-seal packaging films for portioning various types of articles such as bags, pouches or sachets, vacuum formed blisters.

Examples of form-fill-seal applications are the packaging of peat and turf, chemicals, plastic resins, mineral products, food products, small size solid articles.

The above applications and, in general, all the applications involving use of plastic films for packaging are included in the general definition of "flexible plastic packaging".

Non packaging items are for example synthetic clothing articles or medical and surgical films, films which are formed into flexible conveying pipes, membranes for isolation and protection in soil, building and construction applications, films which are laminated with nonwoven membranes.

An important feature of this kind of films is the sealing initiation temperature that it is preferred to be very low, without losing other features of the films such as hot tack.

WO 2011/036077 relates to heat-sealable polyolefin films comprising an heterophasic propylene copolymer and a butene-1 (co)polymer having a content of butene-1 derived units of 75 wt% or more and a flexural modulus (MEF) of 70 MPa or less.

WO2018/211107 relates to a polyolefin composition comprising a random copolymer of propylene and a polymer of 1-butene wherein preferably the 1-butene polymer is a 1-butene copolymer having a 1-butene derived units content lower than 50 wt%.

WO2017/0211 137 A1 discloses polyolefin compositions comprising: A) a propylene ethylene copolymer, B) a propylene ethylene 1-butene terpolymer. Also disclosed are films and multilayer films made with said composition.

The applicant found that it is possible to lower the sealing initiation temperature of a particular propylene composition by using a 1-butene copolymer having particular features.

SUMMARY OF INVENTION

Thus an object of the present disclosure is a polymer composition comprising:

A) from 70 wt% to 95 wt% of a propylene composition comprising:

A1) from 19 wt% to 50 wt% of a propylene ethylene copolymer having an ethylene derived units content ranging from 1.5 wt% to 6.0 wt%;
A2) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;

the sum of the amount of component A1) and A2) being 100;
the composition being characterized by a xylene soluble fraction at 0/25 °C comprised between 2 wt% and 15 wt%;
the sum of the amounts of A1) and A2) being 100 wt%;

B) from 5.0 wt% to 30.0 wt% of a copolymer of 1-butene and ethylene containing from 3.0 wt% to 4.2 wt% of ethylene derived units; said copolymer of 1-butene and ethylene having:

- a Melt Flow Rate: measured according to ISO 1133-1 -(190 °C, 2.16 Kg) ranging from 1.0 to 5.5 g/10 min;

Flexural modulus measured according to ISO 178 ranging from 80 MPa to 250 MPa;
The melting temperature measured according to Iso 11357-3 ranging from 83°C and 108 °C, form I.
the sum of the amounts of A) and B) being 100 wt%.

DETAILED DESCRIPTION OF THE INVENTION

Thus an object of the present disclosure is a polymer composition comprising:

A) from 70.0 wt% to 95.0 wt% preferably from 72.0 wt% to 93.0 wt%; more preferably from 74.0 wt% to 87.0 wt% of a polymer composition (A) comprising:

A1) from 19 wt% to 50 wt%, preferably from 25 wt% to 42 wt%, more preferably from 31 wt% to 38 wt% of a propylene ethylene copolymer having an ethylene derived units content ranging from 1.5 wt% to 6.0 wt%, preferably from 2.6 wt% to 5.2 wt%, more preferably from 2.8 wt% to 4.3 wt%;
A2) from 50 wt% to 81 wt%, preferably from 58 wt% to 75 wt%, more preferably from 62 wt% to 69 wt% of a propylene ethylene 1-butene terpolymer having an ethylene derived units content ranging from 1.5 wt% and 6.0 wt%, preferably from 1.9 wt% to 4.8 wt%, more preferably from 2.1 wt% to 3.7 wt%, and 1-butene derived units content of between 4.8 wt% and 12.4 wt%, preferably from 5.1 wt% to 10.5 wt%, more preferably from 6.8 wt% to 10.0 wt%;

the sum of the amount of component A1) and A2) being 100 wt%;
the composition being characterized by a xylene soluble fraction at 25°C comprised between 2.0 and 15.0 wt%, preferably between 5.0 and 13.0 wt%, more preferably between 7.0 and 11.5 wt%;

B) from 5.0 wt% to 30.0 wt%; preferably from 7.0 wt% to 28.0 wt%; more preferably from 13.0 wt% to 26 wt% of a copolymer of 1-butene and ethylene containing from 3.0 wt% to 4.2 wt% preferably from 3.2 wt% to 4.0 wt%; more preferably from 3.3 wt% to 3.9 wt% of ethylene derived units; said copolymer of 1-butene and ethylene having:

- a Melt Flow Rate: measured according to ISO 1133-1 -(190 °C, 2.16 Kg) ranging from 1.0 to 5.5 g/10 min preferably from 2.1 to 4.8 g/10 min; more preferably from 2.4 to 4.1 g/10 min;

Flexural modulus measured according to ISO 178 ranging from 50 MPa to 250 MPa; preferably ranging from 80 MPa to 210 MPa; more preferably ranging from 92 MPa, to 174 MPa
The melting temperature measured according to Iso 11357-3 ranging from 83°C and 108 °C, preferably ranging from 84°C and 103 °C; more preferably ranging from 88°C and 100 °C, form I;
the sum of the amounts of A) and B) being 100 wt%.

The term "copolymer" as used in the present patent application refers to polymers containing only two comonomers such as propylene and ethylene or 1-butene and ethylene, the term propylene ethylene 1-butene terpolymer is defined as containing only propylene, ethylene and 1-butene comonomers.

The polymer composition (A) herein disclosed can be prepared by a process comprising polymerizing propylene with ethylene and propylene with ethylene and 1-butene, in the presence of a catalyst comprising the product of the reaction between:

(i) a solid catalyst component comprising Ti, Mg, Cl, and an electron donor compound (internal donor);
(ii) an alkylaluminum compound and,
(iii) an electron-donor compound (external donor).

The particles of solid component have substantially spherical morphology and average diameter ranging between 5 μm and 150 μm, preferably from 20 μm to 100 μm and more preferably from 30 μm to 90 μm. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 wt% to 25 wt%.

Generally, the amount of Ti ranges from 0.5 wt% to 5 wt% and more preferably from 0.7 wy% to 3 wt%.

Internal electron donor compounds are 1,3-diethers of formula:

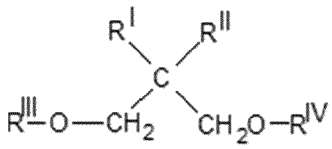

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or are the 1,3-diethers in which the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatom(s) as substitutes for carbon or hydrogen atoms, or both.

Ethers of this type are described in published European patent applications 361493 and 728769.

Representative examples of said diethers are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The preparation of the solid catalyst component can be carried out according to several methods.

According to one method, the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130 °C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours.

The treatment with $TiCl_4$ can be carried out one or more times. The internal electron donor compound can be added in the desired ratios during the treatment with $TiCl_4$.

The alkylaluminum compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$ are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

The polymerization process can be carried out according to known techniques for example slurry polymerization using as diluent an inert hydrocarbon solvent, or bulk polymerization using the liquid monomer (for example propylene)

as a reaction medium. Moreover, it is possible to carry out the polymerization process in gas-phase operating in one or more fluidized or mechanically agitated bed reactors.

The polymerization is generally carried out at temperature of from 20 to 120 °C, preferably of from 40 to 80 °C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The polymer composition (A) is commercially available in the market such as Adsyl 5C 90 F sold by Lyondellbasell.

Component B) is a 1-butene ethylene copolymer commercially available, such as Koattro DP 8310M sold by LyondellBasell and can be prepared according to processes known in the art by using Ziegler Natta catalysts.

The polymer composition of the present disclosure can be prepared by mechanically blending component A) and component B) in accordance with processes well known in the art.

The polymer composition of the present disclosure can be advantageously used for the preparation of films, in particular multilayer films wherein the sealing layer comprises the 1-butene copolymer composition of the present disclosure.

Thus a further object of the present disclosure is a film comprising the polymer composition of the present disclosure in particular a further object of the present disclosure is a multilayer film wherein the sealing layer comprises the polymer composition of the present disclosure.

The multilayer films of the present disclosure are characterized by having at least the sealing layer comprising The polymer composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA.

The combination and number of the layers of the multilayer structure is not particularly limited. The number is usually from 3 to 11 layers or even more, preferably 3 to 9 layers, and more preferably 3 to 7 layers, and more preferably 3 to 5 layers and combinations including C/B/A, C/B/C/B/A, C/B/C/D/C/B/A are possible, provided that at least one sealing layer A comprises the 1-butene copolymer composition of the present disclosure.

Preferred layers of the multilayer film of the present disclosure are 3 or 5 wherein at sealing layer comprises, preferably consists of the 1-butene copolymer composition of the present disclosure.

The polymer composition of the present disclosure can further contain additives used in the art.

The polymer composition of the present disclosure can be advantageously used as sealing layer in a multilayer film, it allows to seal the film at lower temperature.

Preferably the polymer composition of the present disclosure consists essentially of components A) and B) as above described.

Preferably component A) consists essentially of components A1) and A2).

Wherein the term "consists essentially of' means that specific further components can be present, namely those not materially affecting the essential characteristics of the compound or composition. In particular no further polymers especially polyolefins are present in the composition.

The following examples are given to illustrate but not limit the present disclosure.

EXAMPLES

Melt Flow Rate: measured according to ISO 1133 - 1 (230 °C, 2.16 Kg or 190°C, 2.16 Kg).

Tensile Modulus was measured according to ISO 527-2, and ISO 1873-2 on injection moulded sample.

Density was measured according to ISO 1183-1.

The density of samples was measured according to ISO 1183-1 (ISO 1183-1 method A "Methods for determining the density of non-cellular plastics- Part 1: Immersion method, liquid pyknometer method and titration method"; Method A: Immersion method, for solid plastics (except for powders) in void-free form). Test specimens were taken from compression moulded plaques conditioned for 10 days before carrying out the density measure.

**Melting temperature (ISO 11357-2013)**

The melting temperature TmI is the melting temperature attributable to the crystalline form I of the copolymer. In order to determine the TmI, the copolymer sample is melted and then cooled down to 20°C with a cooling rate of 10°C/min., kept for 10 days at room temperature, and then subjected to differential scanning calorimetry (DSC) analysis by cooling to -20°C and then heating to 200°C with a scanning speed corresponding to 10°C/min. In this heating run, the peak in the thermogram is taken as the melting temperature (TmI).

**Ethylene content in a 1-butene ethylene copolymer**

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at ~720 $cm^{-1}$ of 1.3 a.u. (% Transmittance > 5%). Molding conditions were 180$\pm$10°C (356°F) and pressure was around 10 $kg/cm^2$ (142.2 PSI) for about one minute. The pressure was then released, the sample removed from the press and cooled to room temperature. The spectrum of pressed film sample was recorded in absorbance vs. wavenumbers ($cm^{-1}$). The following measurements were used to calculate ethylene ($C_2$) and 1-butene ($C_4$) contents:

a) Area (At) of the combination absorption bands between 4482 and 3950 $cm^{-1}$ which is used for spectrometric normalization of film thickness.
b) Area ($A_{C2}$) of the absorption band due to methylenic sequences ($CH_2$ rocking vibration) in the range 660 to 790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum The reference spectrum is obtained by digital subtraction of a linear polyethylene from a $C_2C_4$ copolymer, in order to extract the $C_4$ band (ethyl group at ~771 cm-1).

The ratio $A_{C2}$ / At is calibrated by analyzing ethylene-1-butene standard copolymers of known compositions, determined by NMR spectroscopy. In order to calculate the ethylene ($C_2$) and 1-butene ($C_4$) content, calibration curves were obtained by using samples of known amount of ethylene and 1-butene detected by $^{13}$C-NMR.

Calibration for ethylene - A calibration curve was obtained by plotting $A_{C2}/A_t$ versus ethylene molar percent (%C2m), and the coefficient $a_{C2}$, $b_{C2}$ and $c_{C2}$ then calculated from a "linear regression".

Calibration for 1-butene - A calibration curve was obtained by plotting $FCR_{C4}$/At versus butane molar percent (%Cam) and the coefficients $a_{C4}$, $b_{C4}$ and $C_{C4}$ then calculated from a "linear regression".

The spectra of the unknown samples are recorded and then (At), ($A_{C2}$) and ($FCR_{C4}$) of the unknown sample are calculated.

The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.
Changes from mol% to wt% are calculated by using molecular weights.

**Determination of the comonomer content in component A**

The comonomers content has been determined by infrared spectroscopy by collecting the IR spectrum of the sample vs. an air background with a Fourier Transform Infrared spectrometer (FTIR); the instrument data acquisition parameters are:

- purge time: 30 seconds minimum
- collect time: 3 minutes minimum
- apodization: Happ-Genzel
- resolution: 2 $cm^{-1}$.

**Sample Preparation:**

Using a hydraulic press, a thick sheet is obtained by pressing about 1 g of sample between two aluminum foils. If homogeneity is in question, a minimum of two pressing operations are recommended. A small portion is cut from this sheet to mold a film. Recommended film thickness ranges between 0.02 and0.05 cm (8 - 20 mils).

Pressing temperature is 180±10 °C (356 °F) and about 10 kg/$cm^2$ (142.2 PSI) pressure. After about 1 minute the pressure is released and the sample is removed from the press and cooled to room temperature.

The spectrum of a pressed film of the polymer is recorded in absorbance vs. wavenumbers ($cm^{-1}$). The following measurements are used to calculate ethylene and 1-butene content:

- Area (At) of the combination absorption bands between 4482 and 3950 $cm^{-1}$ is used for spectrometric normalization of film thickness.
- AC2 is the area of the absorption band between 750-700 $cm^{-1}$ after two proper consecutive spectroscopic subtractions of an isotactic non additivate polypropylene spectrum and then of a reference spectrum of a 1-butene-propylene random copolymer in the range 800-690 $cm^{-1}$.
- DC4 is the height of the absorption band at 769 $cm^{-1}$ (maximum value), after two proper consecutive spectroscopic subtractions of an isotactic non additivate polypropylene spectrum and then of a reference spectrum of an ethylene-propylene random copolymer in the range 800-690 $cm^{-1}$.

In order to calculate the ethylene and 1-butene content calibration straights lines for ethylene and 1-butene obtained by using samples of known amount of ethylene and 1-butene are needed.

**Calibration of ethylene:**

Calibration straight line GC2 is obtained by plotting AC2 /At versus ethylene molar percent (%C2m). The slope of GC2 is calculated from a linear regression.

Calibration of 1-butene:

Calibration straight line GC4 is obtained by plotting DC4 /At versus 1-butene molar percent (%C4m). The slope of GC4 is calculated from a linear regression.

Spectrum of the unknown sample is recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

The 1-butene content (% molar fraction C4m) of the sample is calculated as follows:

$$\%C4m = \frac{1}{G_{C4}} \cdot \left(\frac{A_{C4}}{A_t} - I_{C4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

## Seal Initiation Temperature (SIT)

Preparation of the film specimens

Some films with a thickness of 50 μm are prepared by extruding each test composition in a single screw Collin extruder (length/diameter ratio of screw 1:25) at a film drawing speed of 7 m/min and a melt temperature do 210-250 °C.

Each resulting film is superimposed on a 1000 μm thick film of a propylene homopolymer having a xylene insoluble fraction at 25°C of 97 wt% and a MFR L of 2 g/10 min.

The superimposed films are bonded to each other in a Carver press at 200°C under a 9000 kg load, which is maintained for 5 minutes.

The resulting laminates are stretched longitudinally and transversally, i.e. biaxially, by a factor 6 with a Karo 4 Brueckener film stretcher at 160°C, thus obtaining a 20 μm thick film (18 μm homopolymer+2 μm test).

## Determination of the SIT.

Film Strips, 6 cm wide and 35 cm length are cut from the center of the BOPP film he film was superimposed with a BOPP film made of PP homopolymer. The superimposed specimens are sealed along one of the 2 cm sides with a Brugger Feinmechanik Sealer, model HSG-ETK 745. Sealing time is 5 seconds at a pressure of 0.14 MPa (20 psi). The starting sealing temperature is from about 10 °C less than the melting temperature of the test composition. The sealed strip is cut in 6 specimens 15 mm wide long enough to be claimed in the tensile tester grips. The seal strength 12 FE7234-EP-P1 is tested and load cell capacity 100 N, cross speed 100 mm/min and grip distance 50 mm. The results is expressed as the average of maximum seal strength (N). from are left to cool and then their unsealed ends are attached to an Instron machine where they are tested at a traction speed of 50 mm/min.

The test is than repeated by changing the temperature as follows:
If seal strength 1.5 N then decrease the temperature. Temperature variation must be adjusted stepwise, if seal strength is close to target select steps of 1°C if the strength is far from target select steps of 2°C.

The target seal strength (SIT) is defined as the lowest temperature at which a seal strength higher or equal to 1.5 N is achieved.

## Determination of the hot tack

hot tack measurement after sealing by Brugger HSG Heat-Sealer (with Hot Tack kit). Samples obtained from BOPP film need to be cut at a minimum length of 200 mm and 15mm width and tested at the following conditions:
Set the temperature from no sealing to 130°C with an increase of 5°C steps; at each temperature set the weight necessary to break the film in the neighborhood of the seal.

The specimen is consider break when 50% or more of the seal part is open after the impact.

## Solubility in xylene 0/25° C

2.5 g of copolymer and 250 cm$^3$ of o-xylene are placed in a glass flask fitted with a condenser and a magnetic stirrer. The temperature is increased to the boiling point of the solvent over 30 min. The clear solution thus formed is left at reflux with stirring fora further 30 min. The closed flask is then placed in a bath of ice-water for 30 min and then in a bath of water thermostatically adjusted to 25° C. for 30 min. The solid formed is then filtered off on filter paper at a high filtration rate. 100 cm$^3$ of the liquid obtained from the filtration are poured into a preweighed aluminium container, which is placed on a hot-plate to evaporate off the liquid under a stream of nitrogen. The container is then placed in an oven at 80° C. and maintained under vacuum 45 until a constant weight is obtained. From the amount of filtrate the amount of polymer soluble in xylene is calculated.

**Components A and B**

Component A is a commercial product sold by Lyondelbasell under the tradename Adsyl 5C 90F. Component B is a commercial product sold by Lyondelbasell under the tradename Koattro DP 8310M.

The features of component A are reported on table 1

Table 1

| | | **Component A** |
|---|---|---|
| | | |
| **MFR** | **g/10 min** | **5.9** |
| **C2 content in A** | **wt%** | **3.2** |
| **amount A1** | **wt%** | **35** |
| **C2 content total** | **wt%** | **3.2** |
| **C4 content total** | **wt%** | **6.6** |
| **C2/C4** | | **0.48** |
| **Xylene Soluble 0°/25°** | **wt%** | **9.5** |
| **Tm** | **°C** | **132.4** |
| | | |
| C2=ethylene | | |

The features of component B are reported on table 2.

Table 2

| | | Component B |
|---|---|---|
| MFR 190°C 2.16 kg | g/10 min | 3.5 |
| Flexural modulus | MPa | 120 |
| Tm | °C | 94 |
| Ethylene content | Wt% | 3.7 |

Various amount of component B have bene blended with component A. A two layers BOPP film has been produced for each blend. The two layers being made by the same component. The seal initiation temperature has been measured. Table 3 reports the SIT for each sample.

Table 3

| ex | Comp B | SIT °C |
|---|---|---|
| Comp 1 | 0 | 102 |
| 2 | 15 wt% | 68 |
| 3 | 20 wt% | 68 |
| 4 | 25 wt% | 68 |
| | | |

Comparative component B1 is a 1-butene ethylene copolymer sold by Lyondellbasell under the tradename Toppyl PB 8220M. the features of this polymer are reported on table 4

Table 4

| | | Component B 1 |
|---|---|---|
| MFR 190°C 2.16 kg | g/10 min | 2.5 |
| Flexural modulus | MPa | 140 |
| Tm | °C | 97 |
| Ethylene content | Wt% | 2.7 |

Various amount of component B1 have bene blended with component A. A two layers BOPP film has been produced for each blend. The two layers being made by the same component. The seal initiation temperature has been measured. Table 5 reports the SIT for each sample.

Table 5

| ex | Comp B | SIT °C |
|---|---|---|
| Comp 5 | 0 | 102 |
| Comp 6 | 15 wt% | 74 |
| Comp 7 | 20 wt% | 73 |
| Comp 8 | 25 wt% | 69 |
| | | |

By comparing table 3 and table 5 it is clear that component B according to the invention is more efficient in lowering the SIT of the composition.

**Hot tack**

The hot tack of the films of example 4 and example 8 has been measured at various temperature. The results are reported on table 6.

Table 6

| Temp °C | Ex 4 | Comp ex 6 |
|---|---|---|
| | Hot tack g | Hot tack g |
| 80 | 188 | 133 |
| 90 | 208 | 138 |
| 100 | 303 | 143 |
| 110 | 408 | 158 |
| 120 | 688 | 243 |
| | | |

From table 6 it is clear that the hot tack of the composition according to the present invention is higher with respect to the comparative example.

## Claims

**1.** A polymer composition comprising:

A) from 70 wt% to 95 wt% of a propylene composition comprising:

A1) from 19 wt% to 50 wt% of a propylene ethylene copolymer having an ethylene derived units content

ranging from 1.5 wt% to 6.0 wt%;
A2) from 50 wt% to 81 wt% of a propylene ethylene 1-butene terpolymer having an ethylene derived units content ranging from 1.5 wt% and 6.0 wt% and 1-butene derived units content of between 4.8 wt% and 12.4 wt%;

the sum of the amount of component A1) and A2) being 100;
the composition being **characterized by** a xylene soluble fraction at 0/25 °C comprised between 2 wt% and 15 wt%;
the sum of the amounts of A1) and A2) being 100 wt%;

B) from 5.0 wt% to 30.0 wt% of a copolymer of 1-butene and ethylene containing from 3.0 wt% to 4.2 wt% of ethylene derived units; said copolymer of 1-butene and ethylene having:

- a Melt Flow Rate: measured according to ISO 1133-1 -(190 °C, 2.16 Kg) ranging from 1.0 to 5.5 g/10 min;

flexural modulus measured according to ISO 178 ranging from 80 MPa to 250 MPa;
the melting temperature measured according to Iso 11357-2013 ranging from 83°C and 108 °C, form I.
the sum of the amounts of A) and B) being 100 wt%.

**2.** The polymer composition according to claim 1 wherein component A ranges from 72.0 wt% to 93.0 wt%; and component B) ranges from 7.0 wt% to 28.0 wt%.

**3.** The polymer composition according to claims 1 or 2 wherein:

Component A1 ranges from 25 wt% to 42 wt%;
Component A2 ranges from 58 wt% to 75 wt%.

**4.** The polymer composition according to anyone of claims 1-3 wherein the 1-butene ethylene copolymer component B) contains from 3.2 wt% to 4.0 wt% of ethylene derived units.

**5.** The polymer composition according to anyone of claims 1-4 wherein in component B) the Melt Flow Rate: measured according to ISO 1133-1 -(190 °C, 2.16 Kg) ranges from 2.1 to 4.8 g/10 min.

**6.** The polymer composition according to anyone of claims 1-5 wherein component A1) has ethylene derived units content ranging from 2.6 wt% to 5.2 wt%.

**7.** The polymer composition according to anyone of claims 1-6 wherein component A2) has ethylene derived units content ranging from 1.9 wt% to 4.8 wt% and 1-butene derived units content ranging from 5.1 wt% to 10.5 wt%.

**8.** The polymer composition according to anyone of claims 1-7 wherein component A) has a xylene soluble fraction at 25°C comprised between 5.0 wt% and 13.0 wt%.

**9.** The polymer composition according to anyone of claims 1-8 wherein:

Component A1 ranges from 31 wt% to 38 wt%;
Component A2 ranges from 62 wt% to 69 wt%.

**10.** The polymer composition according to anyone of claims 1-3 wherein the 1-butene ethylene copolymer component B) contains from 3.3 wt% to 3.9 wt% of ethylene derived units.

**11.** The polymer composition according to anyone of claims 1-10 wherein component B) has the melting temperature measured according to Iso 11357-2013 ranging from 84°C and 103 °C, form I.

**12.** The polymer composition according to anyone of claims 1-11 wherein component B) has flexural modulus measured according to ISO 178 ranging from 80 MPa to 210 MPa.

**13.** The polymer composition according to anyone of claims 1-10 wherein component A)) has a Melt Flow Rate: measured according to ISO 1133-1 (190 °C, 2.16 Kg) ranging from 2.4 to 4.1 g/10 min.

**14.** A film comprising the the polymer composition of claims 1-13.

**15.** A multilayer film according to claim 14 comprising the the polymer composition of claims 1-13.

**Patentansprüche**

**1.** Polymerzusammensetzung, umfassend:

A) 70 Gew.% bis 95 Gew.% einer Propylenzusammensetzung, umfassend:

A1) 19 Gew.% bis 50 Gew.% eines Propylen/Ethylen-Copolymers mit einem Gehalt an von Ethylen abgeleiteten Einheiten im Bereich von 1,5 Gew.% bis 6,0 Gew.%;
A2) 50 Gew.% bis 81 Gew.% eines Propylen/Ethylen/1-Buten-Terpolymers mit einem Gehalt an von Ethylen abgeleiteten Einheiten im Bereich von 1,5 Gew.% bis 6,0 Gew.% und einem Gehalt an von 1-Buten abgeleiteten Einheiten zwischen 4,8 Gew.% und 12,4 Gew.%;

wobei die Summe der Mengen der Komponenten A1) und A2) 100 beträgt;
wobei die Zusammensetzung durch eine in Xylol bei 0/25 °C lösliche Fraktion zwischen 2 Gew.% und 15 Gew.% gekennzeichnet ist;
wobei die Summe der Mengen von A1) und A2) 100 Gew.% beträgt;

B) 5,0 Gew.% bis 30,0 Gew.% eines Copolymers von 1-Buten und Ethylen, das 3,0 Gew.% bis 4,2 Gew.% von Ethylen abgeleiteten Einheiten enthält; wobei das Copolymer von 1-Buten und Ethylen aufweist:

eine Schmelzflussrate, gemessen gemäß ISO 1133-1 (190 °C, 2,16 Kg), im Bereich von 1,0 bis 5,5 g/10 min.;
einen Biegemodul, gemessen gemäß ISO 178, im Bereich von 80 MPa bis 250 MPa;
eine Schmelztemperatur, gemessen gemäß ISO 11357-2013, im Bereich von 83 °C bis 108 °C, Form I,
wobei die Summe der Mengen von A) und B) 100 Gew.% beträgt.

**2.** Polymerzusammensetzung nach Anspruch 1, wobei Komponente A) im Bereich von 72,0 Gew.% bis 93,0 Gew.% liegt; und Komponente B) im Bereich von 7,0 Gew.% bis 28,0 Gew.% liegt.

**3.** Polymerzusammensetzung nach Anspruch 1 oder 2, wobei:

Komponente A1) im Bereich von 25 Gew.% bis 42 Gew.% liegt;
Komponente A2) im Bereich von 58 Gew.% bis 75 Gew.% liegt.

**4.** Polymerzusammensetzung nach einem der Ansprüche 1 bis 3, wobei die 1-Buten/Ethylen-Copolymerkomponente B) 3,2 Gew.% bis 4,0 Gew.% von Ethylen abgeleitete Einheiten enthält.

**5.** Polymerzusammensetzung nach einem der Ansprüche 1 bis 4, wobei in Komponente B) die Schmelzflussrate, gemessen gemäß ISO 1133-1 (190 °C, 2,16 kg), im Bereich von 2,1 bis 4,8 g/10 min liegt.

**6.** Polymerzusammensetzung nach einem der Ansprüche 1 bis 5, wobei Komponente A1) einen Gehalt an von Ethylen abgeleiteten Einheiten im Bereich von 2,6 Gew.% bis 5,2 Gew.% aufweist.

**7.** Polymerzusammensetzung nach einem der Ansprüche 1 bis 6, wobei Komponente A2) einen Gehalt an von Ethylen abgeleiteten Einheiten im Bereich von 1,9 Gew.% bis 4,8 Gew.% und einen Gehalt an von 1-Buten abgeleiteten Einheiten im Bereich von 5,1 Gew. % bis 10,5 Gew.% aufweist.

**8.** Polymerzusammensetzung nach einem der Ansprüche 1 bis 7, wobei Komponente A) eine in Xylol bei 25 °C lösliche Fraktion zwischen 5,0 Gew.% und 13,0 Gew.% aufweist.

**9.** Polymerzusammensetzung nach einem der Ansprüche 1 bis 8, wobei:

Komponente A1) im Bereich von 31 Gew.% bis 38 Gew.% liegt;
Komponente A2) im Bereich von 62 Gew.% bis 69 Gew.% liegt.

**10.** Polymerzusammensetzung nach einem der Ansprüche 1 bis 3, wobei die 1-Buten/Ethylen-Copolymerkomponente B) 3,3 Gew.% bis 3,9 Gew.% von Ethylen abgeleitete Einheiten enthält.

**11.** Polymerzusammensetzung nach einem der Ansprüche 1 bis 10, wobei Komponente B) eine Schmelztemperatur, gemessen gemäß ISO 11357-2013, im Bereich von 84 °C bis 103 °C, Form I, aufweist.

**12.** Polymerzusammensetzung nach einem der Ansprüche 1 bis 11, wobei Komponente B) einen Biegemodul, gemessen gemäß ISO 178, im Bereich von 80 MPa bis 210 MPa aufweist.

**13.** Polymerzusammensetzung nach einem der Ansprüche 1 bis 10, wobei Komponente A)) eine Schmelzflussrate, gemessen gemäß ISO 1133-1 (190 °C, 2,16 kg), im Bereich von 2,4 bis 4,1 g/10 min, aufweist.

**14.** Film, umfassend die Polymerzusammensetzung nach den Ansprüchen 1 bis 13.

**15.** Mehrschichtfilm nach Anspruch 14, umfassend die Polymerzusammensetzung nach den Ansprüchen 1 bis 13.

## Revendications

**1.** Composition polymère comprenant :

A) 70 % en poids à 95 % en poids d'une composition de propylène comprenant :

A1) 19 % en poids à 50 % en poids d'un copolymère de propylène-éthylène présentant une teneur en motifs dérivés de l'éthylène située dans la plage de 1,5 % en poids à 6,0 % en poids ;
A2) 50 % en poids à 81 % en poids d'un terpolymère de propylène-éthylène-1-butène présentant une teneur en motifs dérivés de l'éthylène située dans la plage de 1,5 % en poids à 6,0 % en poids et une teneur en motifs dérivés du 1-butène entre 4,8 % en poids et 12,4 % en poids,

la somme de la quantité du composant A1) et du composant A2) valant 100 ;
la composition étant **caractérisée par** une fraction soluble dans le xylène à 0/25 °C située entre 2 % en poids et 15 % en poids ;
la somme des quantités de A1) et de A2) valant 100 % en poids ;

B) 5,0 % en poids à 30,0 % en poids d'un copolymère de 1-butène et d'éthylène contenant 3,0 % en poids à 4,2 % en poids de motifs dérivés de l'éthylène ; ledit copolymère de 1-butène et d'éthylène présentant :

- un indice de fluidité à chaud, mesuré selon la norme ISO 1133-1 (190 °C, 2,16 kg), situé dans la plage de 1,0 à 5,5 g/10 min ;
- un module de flexion, mesuré selon la norme ISO 178, situé dans la plage de 80 MPa à 250 MPa ;
- une température de fusion, mesurée selon la norme ISO 11357-2013, située dans la plage de 83 °C à 108 °C, forme I,

la somme des quantités de A) et de B) valant 100 % en poids.

**2.** Composition polymère selon la revendication 1, dans laquelle le constituant A représente 72,0 % en poids à 93,0 % en poids et le constituant B) représente 7,0 % en poids à 28,0 % en poids.

**3.** Composition polymère selon les revendications 1 ou 2, dans laquelle :

le constituant A1 représente 25 % en poids à 42 % en poids ;
le constituant A2 représente 58 % en poids à 75 % en poids.

**4.** Composition polymère selon l'une quelconque des revendications 1 à 3, dans laquelle le constituant B) de copolymère de 1-butène-éthylène contient 3,2 % en poids à 4,0 % en poids de motifs dérivés de l'éthylène.

**5.** Composition polymère selon l'une quelconque des revendications 1 à 4, dans laquelle, dans le constituant B), l'indice de fluidité à chaud, mesuré selon la norme ISO 1133-1 (190 °C, 2,16 kg), est situé dans la plage de 2,1 à 4,8 g/10 min.

6. Composition polymère selon l'une quelconque des revendications 1 à 5, dans laquelle le constituant A1) présente une teneur en motifs dérivés de l'éthylène située dans la plage de 2,6 % en poids à 5,2 % en poids.

7. Composition polymère selon l'une quelconque des revendications 1 à 6, dans laquelle le constituant A2) présente une teneur en motifs dérivés de l'éthylène située dans la plage de 1,9 % en poids à 4,8 % en poids et une teneur en motifs dérivés du 1-butène située dans la plage de 5,1 % en poids à 10,5 % en poids.

8. Composition polymère selon l'une quelconque des revendications 1 à 7, dans laquelle le constituant A) présente une fraction soluble dans le xylène à 25 °C située entre 5,0 % en poids et 13,0 % en poids.

9. Composition polymère selon l'une quelconque des revendications 1 à 8, dans laquelle

   le constituant A1 représente 31 % en poids à 38 % en poids ;
   le constituant A2 représente 62 % en poids à 69 % en poids.

10. Composition polymère selon l'une quelconque des revendications 1 à 3, dans laquelle le constituant B) de copolymère de 1-butène-éthylène contient 3,3 % en poids à 3,9 % en poids de motifs dérivés de l'éthylène.

11. Composition polymère selon l'une quelconque des revendications 1 à 10, dans laquelle le constituant B) présente une température de fusion, mesurée selon la norme ISO 11357-2013, située dans la plage de 84 °C à 103 °C, forme I.

12. Composition polymère selon l'une quelconque des revendications 1 à 11, dans laquelle le constituant B) présente un module de flexion, mesuré selon la norme ISO 178, situé dans la plage de 80 MPa à 210 MPa.

13. Composition polymère selon l'une quelconque des revendications 1 à 10, dans laquelle le constituant A)) présente un indice de fluidité à chaud, mesuré selon la norme ISO 1133-1 (190 °C, 2,16 kg), situé dans la plage de 2,4 à 4,1 g/10 min.

14. Film comprenant la composition polymère selon les revendications 1-13.

15. Film multicouche selon la revendication 14, comprenant la composition polymère selon les revendications 1-13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011036077 A
- WO 2018211107 A
- WO 20170211137 A1
- EP 361493 A
- EP 728769 A
- US 4399054 A
- US 4469648 A